# EUROPEAN PATENT APPLICATION

(11) **EP 1 467 097 A2**
(43) Date of publication of application: **13.10.2004**
(21) Application number: 04008622.5
(22) Date of filing: 08.04.2004
(51) Int. Cl.: F04B 27/10

(54) **Reciprocating compressor**

(30) Priority: 11.04.2003 JP 2003107833
(71) Applicant: Zexel Valeo Climate Control Corporation, Saitama (JP)
(72) Inventor: Takazawa, Osamu Zexel Valeo Climate Control Corp., Konan-machi Osato-gun Saitama (JP); Kanai, Hiroshi Zexel Valeo Climate Control Corp., Konan-machi Osato-gun Saitama (JP); Furuya, Shunichi Zexel Valeo Climate Control Corp, Konan-machi Osato-gun Saitama (JP); Deguchi, Hironobu Zexel Valeo Climate Control Corp, Konan-machi Osato-gun Saitama (JP); Hayashi, Sakae Zexel Valeo Climate Control Corp, Konan-machi Osato-gun Saitama (JP); Damson, Daniel Zexel Valeo Climate Control Corp, Konan-machi Osato-gun Saitama (JP)
(74) Representative: Hofmann, Harald

(57) **Abstract**

In a compressor having a shaft 8 rotated by a drive force supplied from the outside, and a reciprocating mechanism that converts the rotating movement of the shaft 8 to a linearly reciprocating movement along the axial direction and causes a piston to move reciprocally, a thrust bearing unit 18 provided between a thrust flange 16 constituting the reciprocating mechanism and a front head 5 includes thrust bearings disposed over two rows set along the radial direction. A gap 46 widening toward the outside along the radial direction is formed between the thrust bearing unit 18 and the front head 5. This structure improves the load withstanding performance of the thrust bearing unit provided between the front head and the thrust flange in a reciprocating compressor.

## Description

The present invention relates to a reciprocating compressor particularly suited for application in a supercritical freezing cycle in which CO2 is used as a coolant.

In a supercritical freezing cycle in which CO2 (carbon dioxide) is used as a coolant, the pressure rises to a level as much as 10 times higher than the pressure in a freezing cycle using a freon coolant. For this reason, a larger thrust bearing is used in the supercritical freezing cycle to bear the component of the reactive force from the piston, which manifests along the thrust direction, via a cam plate and a thrust flange, compared to the thrust bearing in a compressor using a freon coolant. For instance, a thrust bearing large enough to handle the load originating from the piston is utilized, as disclosed in Japanese Unexamined Patent Publication No. 2001-32769.

In order to accommodate a thrust bearing of a significant size, the dimensions of the compressor, mainly along the radial direction, must be generous. The thrust bearing is constituted by disposing needle rollers radially in a single row. While the diameter of the thrust bearing needs to be reduced as much as possible in order to keep pace with increasing demand for smaller and faster compressors, the load withstanding performance of the thrust bearing is bound to become poor if the diameter is simply reduced.

While it is conceivable that the load withstanding performance may be improved by, for instance, increasing the length of the needle rollers, an increase in the needle roller length will result in a greater difference between the circumferential speed at the inner end of the rollers and the circumferential speed at the outer end of the rollers. Through testing, it has been confirmed that friction occurs at the needle rollers and race to result in increased wear, which lowers durability, particularly when the bearing operates at high speed. In addition, the presence of the radial bearing disposed further inward in the radial direction in the vicinity of the thrust bearing makes it difficult to increase the radial dimensions of the thrust bearing.

A shaft seal must be able to withstand a high level of pressure and is often mounted from the inside of the front head. In order to facilitate the shaft seal assembly process, a radial bearing having an inner diameter larger than the diameter of the shaft seal housing is used in patent reference literature 1 described above. Namely, the shaft seal must be inserted and assembled by passing it through the internal space defined by the inner diameter of the radial bearing, which is press-fitted inside the front head. This naturally means that the radial bearing is bound to be quite large. The shaft seal is achieved through mechanical sealing.

Accordingly, an object of the present invention is to improve the load withstanding performance and to achieve miniaturization.

The reciprocating compressor according to the present invention, having a shaft rotated with a drive force supplied from outside and a reciprocating mechanism that converts the rotating movement of the shaft to a linearly reciprocating movement along the axial direction and is used to cause a piston to move reciprocally is characterized in that thrust bearings are disposed radially over a plurality of rows between a thrust flange constituting the reciprocating mechanism and a front head. By disposing thrust bearings over a plurality of rows, the load withstanding performance is improved and, at the same time, since the load is borne by distributing the load over the plurality of thrust bearings, the size of the individual thrust bearings can be reduced to achieve a lower profile.

The thrust bearing are radially disposed in two rows and they are each constituted with, at least, needle rollers.

While the length of the needle rollers provided inward along the radial direction may be set to equal to the length of the needle rollers provided outward along the radial direction, the mass of the outer needle rollers can be reduced by setting the length of the needle rollers provided inward along the radial direction greater than that of the needle rollers provided outward along the radial direction, and since a reduction in the mass of the outer needle rollers prevents an increase in the centrifugal force applied to the assembly, the holder does not become worn readily. Alternatively, by setting the length of the needle rollers provided inward along the radial direction smaller than the length of the needle rollers provided outward along the radial direction, the inner circumferential speed and the outer circumferential speed can be equalized to reduce the frictional forces originating from the inner needle rollers applied to the race.

The reciprocating compressor according to the present invention is further characterized in that a gap that widens toward the outside along the radial direction is formed between the thrust bearings and the front head, which supports the thrust bearings. While the load applied to the thrust bearing provided outward along the radial direction increases as the load becomes larger, the thrust bearings become tilted toward the gap (toward the front head) formed between the thrust bearings and the front head to cause the load to be applied to the inner thrust bearing and the outer thrust bearing evenly.

The gap mentioned above may be formed by setting the diameter of the needle rollers provided outward along the radial direction smaller than the diameter of the needle rollers provided inward along the radial direction, or it may be formed by setting the thickness of either of or both of races disposed on the front side and the rear side of the needle bearings smaller toward the outside along the radial direction compared to the thickness toward the inner side along the radial direction. Alternatively, the gap may be formed with an inclination formed at the front head at the surface where the thrust bearings come in contact with the front head.

In addition, the thrust bearings may be constituted with needle rollers and spherical bodies disposed inward and outward along the radial direction, the number of needle rollers or spherical bodies disposed outward along the radial direction may be set larger than the number of needle rollers or spherical bodies disposed inward along the radial direction, the thrust bearings provided over a plurality of rows set along the radial direction may be constituted as an integrated unit or they may be disposed as separate parts independent of one another. A radial bearing is first fitted at a thrust flange and then is inserted together with the shaft into a radial bearing insertion portion, which is formed as a fitting gap where the radial bearing can be inserted. This allows the shaft seal to be inserted from the inside of the front head easily, without being hindered by the radial bearing. Namely, the radial bearing is not mounted at the front head in advance and for this reason, the shaft seal does not need to be mounted through the inner space defined by the inner diameter of the radial bearing. As a result, it becomes possible to reduce the diameter of the radial bearing.

Furthermore, by constituting the radial bearing as a solid-type bearing, the profile of the radial bearing can be lowered to allow a greater space along the radial direction to accommodate the thrust bearings disposed over the plurality of rows. Alternatively, a shell-shaped radial bearing may be used so that it is inserted at the radial bearing insertion portion of the front head with the outer race press-fitted and locked inside a sleeve. The coolant used in this compressor is carbon dioxide.

Further objects and advantages of the invention can be more fully understood from the following detailed description given in conjunction with the accompanying drawings. They show;
FIG. 1 is a sectional view of a reciprocating compressor adopting the present invention;
FIG. 2 is an enlarged sectional view of the essential portion of the reciprocating compressor in FIG. 1;
FIG. 3 is a plan view of the upper half of the thrust bearings of the reciprocating compressor;
FIG. 4 is an enlarged sectional view of the thrust bearings in the reciprocating compressor;
FIGS. 5 through 7 are enlarged sectional views of three variations that may be adopted to form a gap between the thrust bearings and the front head;
FIGS. 8 through 10 are enlarged sectional views each presenting an example in which the thrust bearings are constituted as an integrated unit or as separate parts;
FIG. 11 is a plan view of the upper half of thrust bearings with a larger number of needle rollers disposed on the outer side than on the inner side;
FIG. 12 is a plan view of the upper half of thrust bearings with an inner thrust bearing constituted with needle rollers and an outer thrust bearing constituted with spherical bodies;
FIG. 13 is a plan view of the upper half of thrust bearings with an inner thrust bearing constituted with needle rollers and an outer thrust bearing constituted with spherical bodies disposed in a larger number than the number of needle rollers; and
FIG. 14 is an enlarged sectional view of the essential portion of a shell-shaped radial bearing.

The following is an explanation of the embodiments of the present invention, given in reference to the drawings.

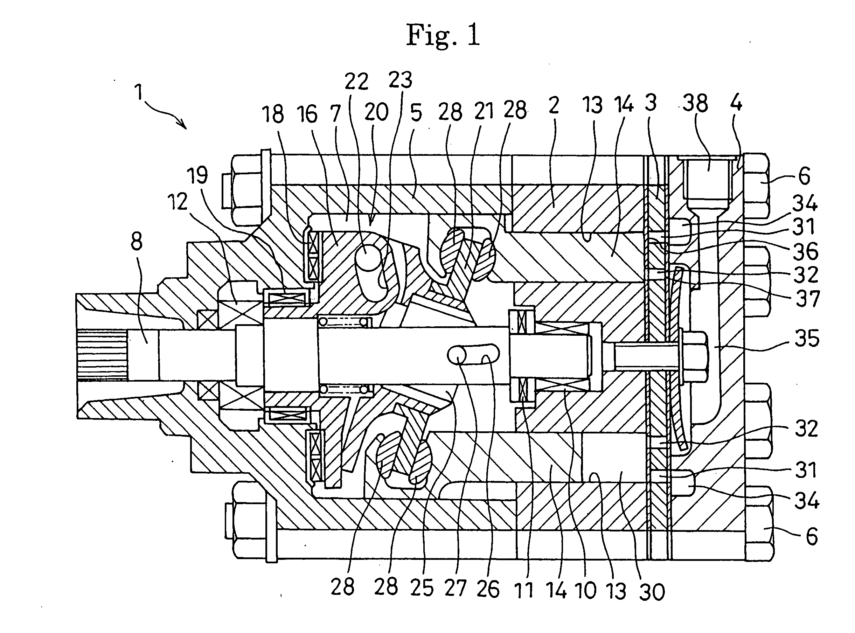

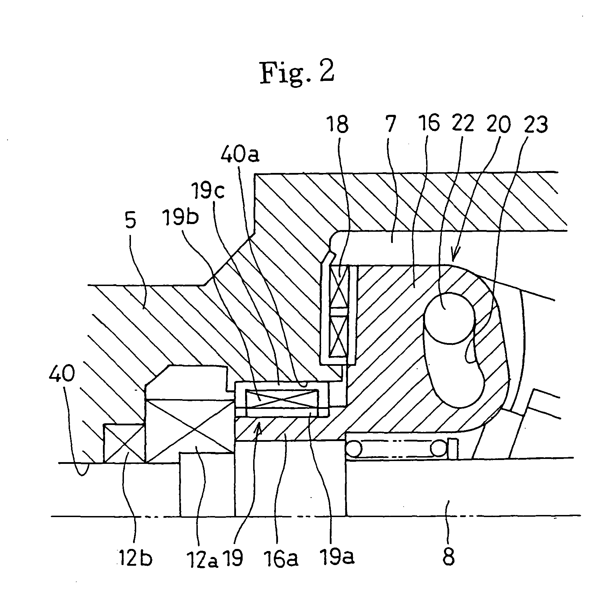

A reciprocating compressor 1 in FIGS. 1 and 2, which is employed in a supercritical freezing cycle using a coolant such as CO2 (carbon dioxide) as an operating fluid, comprises a cylinder block 2, a rear head 4 mounted on the rear side (the right side in the figures) of the cylinder block 2 via a valve plate 3 and a front head 5 mounted so as to closed off the front side (the left side in the figures) of the cylinder block 2. A plurality of fastening bolts 6 are used to fasten the front head 5, the cylinder block 2, the valve plate 3 and the rear head 4, constituting the overall housing of the compressor.

A crank chamber 7 formed by mounting the front head 5 at the cylinder block 2 houses a shaft 8 one end of which projects out of the front head 5 and is fixed to an armature of an electromagnetic clutch (not shown). The shaft 8 is supported by a radial bearing 10, a thrust bearing 11 and a radial bearing 19 to be described below. Reference numeral 12 indicates a shaft seal provided between the shaft 8 and the front head 5.

At the cylinder block 2, a plurality (six) of cylinder bores 13 are formed over equal intervals on a circumference centered around the shaft. Inside each cylinder bore 13, a single-ended piston 14 is inserted so as to slide reciprocally in the cylinder bore 13.

A thrust flange 16 that rotates as one with the shaft 8 is fixed to the shaft 8 in the crank chamber 7. The thrust flange 16 is rotatably supported relative to the front head 5 via a thrust bearing 18 and the radial bearing 19 to be detailed below.

In addition, the thrust flange 16 is connected to a cam plate 21 via a link mechanism 20 constituted of a longitudinal hole 23 formed at the thrust flange 16 and a pin 20 projecting at the cam plate 21. The cam plate 21 includes a through hole 25 formed at the center thereof, at which the shaft 8 is inserted, and a pin 27 projecting along the direction of the radius of the through hole 25 at the cam plate 21 is inserted in a longitudinal hole 26 formed at the shaft 8. Thus, the cam plate 21 is caused to rotate as one with the thrust flange 16 as the thrust flange 16 rotates, and also it is caused to move inside the longitudinal 26 by the pressure in the crank chamber 7 to change the angle relative to the shaft 8 measured with the pin 27 set as the fulcrum.

The cam plate 21 is also retained at the bottom ends of the single-ended pistons 14 projecting out into the crank chamber 7 via a pair of shoes 28 disposed so as to clamp the edge of the cam plate 21 from the front and the rear. Thus, as the shaft 8 rotates and the cam plate 21 also rotates, the rotating movement is converted to linearly reciprocating movement of the single-ended pistons 14 via the shoes 28, and as the single-ended pistons 14 move reciprocally, the volumetric capacity inside the compression spaces 30 formed between the single-ended pistons 14 and a valve plate 3 changes within the cylinder bores 13.

At the valve plate 3, an intake hole 31 and an outlet hole 32 are formed in correspondence to each cylinder bore 13, and at the rear head 4, intake chambers 34 where the operating fluid to be supplied to the individual compression spaces 30 is accumulated, a discharge chamber 35 where the operating fluid discharged from the compression spaces 30 is accumulated are formed. The intake chambers 34 are formed successively around the discharge chamber 35 to connect with an intake port (not shown) and also communicate with the compression spaces 30 via the corresponding intake holes 31, whereas the discharge chamber 35 communicates with the compression spaces 30 via the outlet holes 32 and also connects with an outlet port 38.

The intake holes 31 are each opened/closed with an intake valve 36 disposed on the front side of the valve plate 3, whereas the discharge holes 32 are each opened/closed by an outlet valve 37 disposed on the rear side of the valve plate 3.

As the shaft 8 rotates in the reciprocating compressor 1 structured as described above, the rotational force of the shaft 8 is communicated to the cam plate 21 via the thrust flange 16 and the link mechanism 20, causing the cam plate 21 to rotate as well. The rotation of the cam plate 21 causes the pistons 14 to make a linearly reciprocating movement via the shoes 28. As the pistons 14 move reciprocally inside the cylinder bores 13, the volumetric capacities of the compression spaces 30 change. As the volumetric capacities change, the coolant gas is sequentially taken in, compressed and let out. As a result, a high-pressure operating fluid is let out through the outlet port 38 into the freezing cycle in a volume corresponding to the angle of inclination of the cam plate 21.

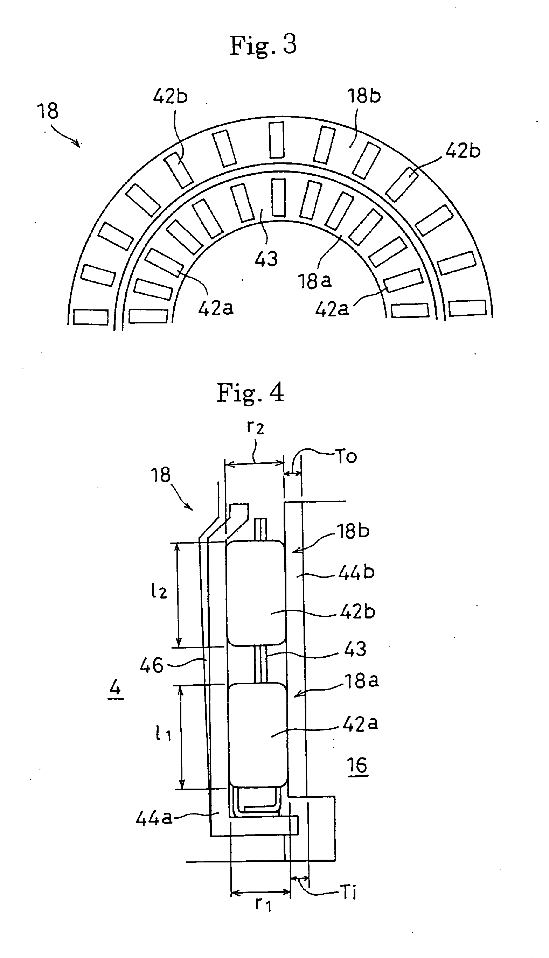

The structure according to the present invention adopted in the reciprocating compressor 1 having the structural features and functions described above is characterized by the thrust bearing 18 which supports the thrust flange 16 along the thrust direction, the front head 5 having a contact surface at which the thrust bearing unit 18 is supported and the radial bearing 19 mentioned earlier. Namely, the thrust bearing unit 18 adopting the structure illustrated in FIGS. 2, 3 and 4 includes a thrust bearing 18a and a thrust bearing 18b disposed over two rows set along the radial direction. Thus, the dimension (length) of the thrust bearing unit 18 along the radial direction is increased compared to the corresponding dimension in a thrust bearing in the related art, with the thrust bearing 18a disposed inward along the radial direction extended in the direction of the shaft 8.

The thrust bearing unit 18 is constituted of needle rollers 42a and 42b held over appropriate intervals by a holder 43. races 44a and 44b are disposed so as to enclose the needle rollers 42a and 42b between them. The needle rollers 42a disposed inward along the radial direction and the needle rollers 42b disposed outward along the radial direction have diameters r1 and r2 equal to each other and length l1 and l2 equal to each other. In addition, the thickness Ti of the race 44b on the inner side along the radial direction is equal to the thickness To of the race 44b on the outer side along the radial direction. Since the load is distributed over the two sets of needle rollers 42a and 42b, it becomes possible to improve the load withstanding performance with which the load from the thrust flange 16 is withstood.

Instead of setting the length l1 and l2 of the needle rollers 42a and 42b equal to each other, the length 12 of the needle rollers 42b disposed outward along the radial direction may be set smaller than the lengthl1 of the needle rollers 42a disposed inward along the radial direction to reduce the mass of the outer needle rollers 42b, which, in turn, reduces the centrifugal force and prevents wear of the holder.

Alternatively, by setting the length 11 of the needle rollers 42a disposed inward along the radial direction smaller than the length l2 of the needle rollers 42b disposed outward along the radial direction, the extent of friction caused by sliding needle rollers can be lowered. Namely, when the length l1 and the length l2 are equal to each other, the internal/external circumferential speed difference manifesting at the individual needle rollers is more significant at the needle rollers disposed inward along the radial direction. A significant internal/external circumferential speed difference induces slippage at the needle rollers. Thus, by ensuring that length l2 > length l1, the internal/external circumferential speed difference manifesting at the needle rollers 42a and the internal/external circumferential speed difference manifesting at the needle rollers 42b can be equalized and the extent of friction occurring at the needle rollers 42a can be reduced. The specific combination of the length of the needle rollers to be adopted should be determined for each product. It is to be noted that the diameters r1 and r2 of the needle rollers 42a and 42b and the thicknesses of the races 44a and 44b, which are an essential part of the present invention that allows the load to be evenly distributed, are explained below.

The radial bearing 19 is a solid radial bearing disposed between the external circumference of an annular base portion 16a of the thrust flange 16 and the front head 5. An inner race 19a is lightly press-fitted on the outside of the base portion 16a, with a needle roller 19b fitted on the outside of the race 19a and an outer race 19c fitted as the outer-most member. The needle roller 19b and the outer race 19c are held together so that they do not become parted from each other.

Namely, when the reciprocating compressor 1 is assembled, the thrust flange 16 is mounted by press-fitting it into the shaft 8 and is inserted through a shaft hole 40 formed at the front head 5 from the inside of the front head 5. Prior to the insertion, the inner race 19a, the needle roller 19b and the outer race 19c are externally fitted at the base portion 16a of the thrust flange 16, and the radial bearing 19 is thus loosely fitted at a radial bearing insertion portion 40a formed at the front head 5. It is to be noted that a lock ring 12b of the shaft seal, too, is passed through the radial bearing insertion portion 40a and is mounted at the front housing prior to the assembly of the radial bearing 19. After the radial bearing 19 is externally fitted at the inner race 19a, a shaft seal lock ring 12a mounted at the shaft 8 is allowed to pass through the insertion portion 40a until it comes in contact with the shaft seal lock ring 12b.

The radial bearing insertion portion 40a is set over a short distance from the shaft 8 since the thrust bearing unit 18 having thrust bearings disposed over two rows widens toward the shaft along the radial direction as described above. However, the solid radial bearing 19 achieves high load withstanding performance against a load applied along the radial direction in spite of its low profile, and its low profile assures ample space along the radial direction to accommodate the thrust bearing unit 18.

In addition, since the inner diameters of the radial bearing insertion portion 40a will become narrower and thus, it will become difficult to insert the shaft seal 12 if a shell-type radial bearing 19 is first press-fitted at the radial bearing insertion portion 40a, the radial bearing 19 is first mounted at the thrust flange 16 and then is mounted at the front head 5 to allow the shaft seal 12 to be installed from the inside of the front head 5 with ease. In the related art, in which the shell-type radial bearing is press-fitted at the radial bearing insertion portion 40a, the inner diameter of the insertion portion must be set larger than the external diameter of the shaft seal 12 to result in an increase in the size of the insertion portion. Namely, the radial bearing 19 is fitted in the radial bearing insertion portion 40a at the front head 5 and the radial bearing insertion portion 40a constitutes a fitting gap achieving predetermined dimensions.

Furthermore, by relocating the base portion 16a of the thrust flange 16 toward the rear head, it becomes possible to form a base portion with a sufficient wall thickness, as shown in FIG. 14, and in such a case, the gap between the radial bearing insertion portion 40a at the front head 5 and the shaft 8 widens to allow a shell-type radial bearing to be installed as shown in the figure instead of the solid radial bearing 19. In other words, a sleeve 39 is externally fitted at the radial bearing 19 constituted of the inner race 19a, the needle roller 19b and the outer race 19c. Also, by adopting a structure in which the needle rollers 19b roll directly over the shaft, it becomes possible to omit the inner race 19a.

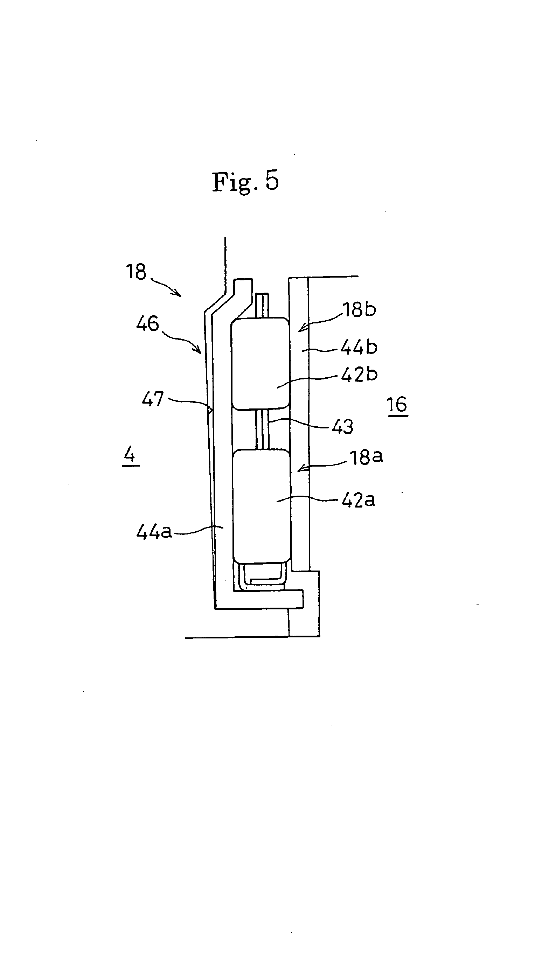

In FIGS. 5 through 7, a gap 46 (in a no-load state) that widens toward the outside along the radial direction is formed between the thrust bearing unit 18 and the front head 5 that supports the thrust bearing unit 18 by using a thrust bearing unit 18 with the needle rollers 42b disposed outward along the radial direction having a smaller length so as to distribute the load from the thrust flange 16 evenly to the inner side and the outer side of the thrust bearing unit 18 along the radial direction at all times. In the example presented in FIG. 5, the gap 46 is formed between the front head 5 and the thrust bearing unit 18 fitted at and fixed to the front head 5 with an inclination 47 formed at the contact surface of the front head 5. This inclination 47 may be formed as a continuous inclination or in steps.

As the stroke of the single-ended pistons 14 increases and the rotation rate increases in the reciprocating compressor 1 shown in FIG. 1, the load applied to the thrust flange 16 also increases. Under normal circumstances, the outer thrust bearing 18b will be subjected to a particularly high load in this situation to hasten the wear of the outer needle rollers 42b because of the uneven load distribution. However, the thrust bearing unit 18 is allowed to tilt toward the front in correspondence to the load level and thus the load can be withstood evenly over the two rows of thrust bearings 18a and 18b. In other words, the load is distributed uniformly to effectively prevent wear of the outer needle rollers.

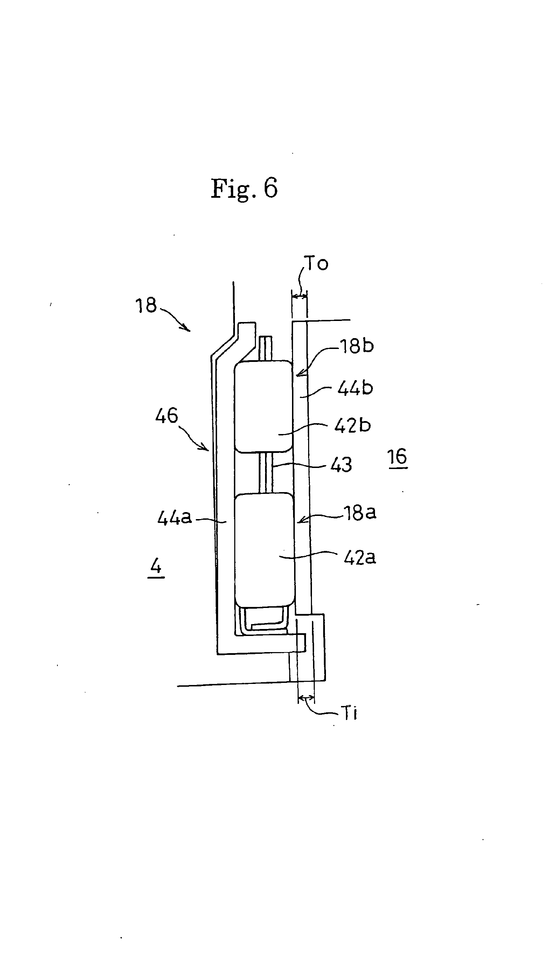

In the example presented in FIG. 6, the gap 46 is formed by setting the thickness To of the race 44b on the outer side along the radial direction smaller than the thickness Ti of the race 44b on the inner side along the radial direction. Advantages similar to those realized in the example described above are achieved in this manner as well. It is to be noted that although not shown, the thickness of the front side race 44a may be varied, and it goes without saying that the thickness at both the race 44a and the race 44b may be varied.

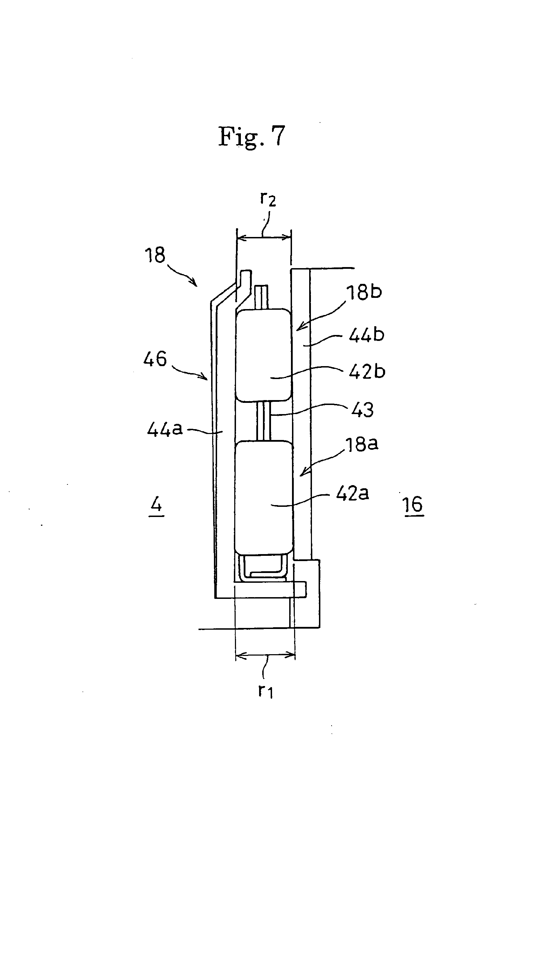

In the example presented in FIG. 7, the gap 46 is formed by setting the diameter r2 of the needle rollers 42b disposed outward along the radial direction smaller than the diameter r1 of the needle rollers 42a disposed inward along the radial direction. The gap formed in this manner, too, achieves advantages similar to those described above.

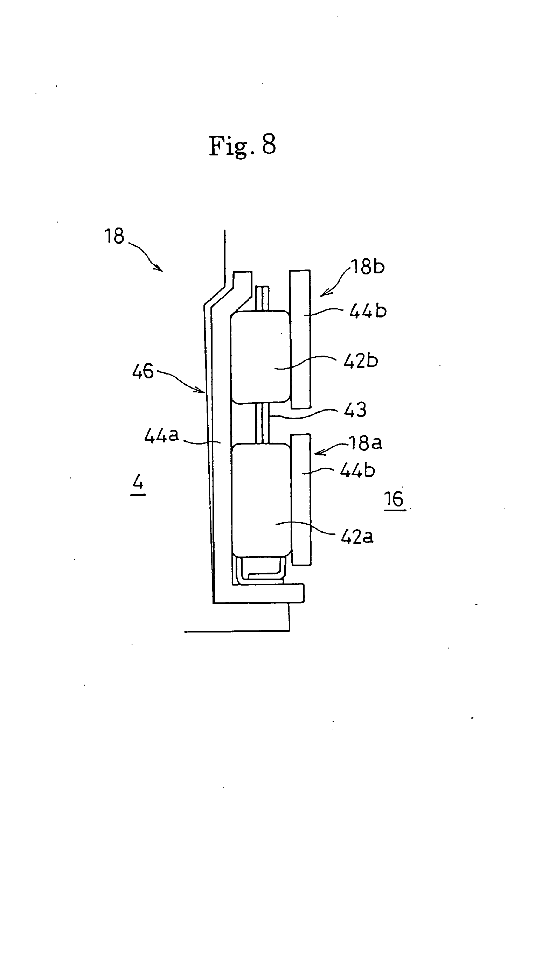

FIGS. 8 through 10 show examples of variations of the thrust bearing unit 18. In the example shown in FIG. 8, a holder 43 and the front side race 44a are each formed as a single piece unit, whereas separate races 44b and 44b are disposed on the rear-side.

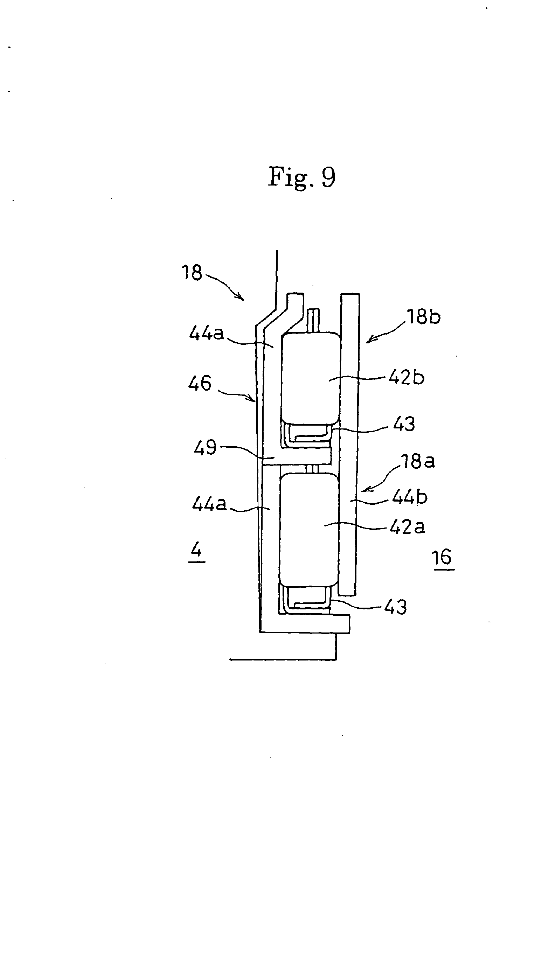

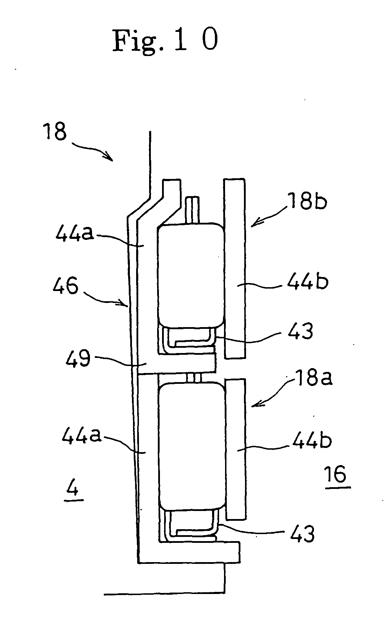

In the example presented in FIG. 9, separate holders 43 and separate front side races 44a and 44a are used, whereas a one-piece race 44b is provided on the rear side. Reference numeral 49 indicates a separating plate. In the example presented in FIG. 10, separate holders 43, separate front side races 44a and 44a and separate rear side races 44b and 44b are used. The example in FIG. 10 also includes a separating plate 49.

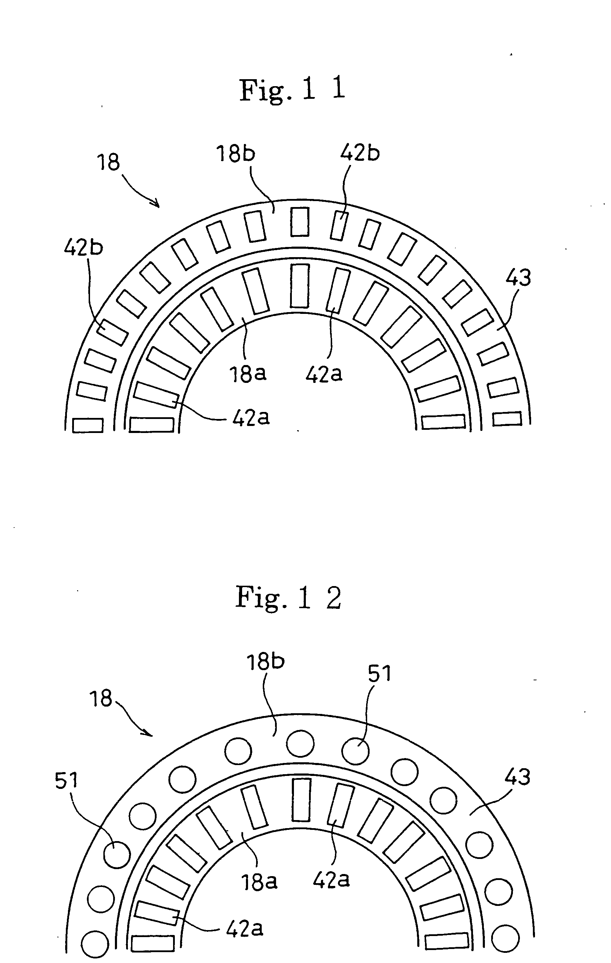

In addition, FIG. 11 shows an example in which a larger number of outer needle rollers 42b is disposed compared to the number of needle rollers 42a disposed inward along the radial direction at the thrust bearing unit 18. Namely, there are 36 outer needle rollers 42b, whereas there are only 24 inner needle rollers 42a. In this case, the level of load withstanding performance on the outer side is improved.

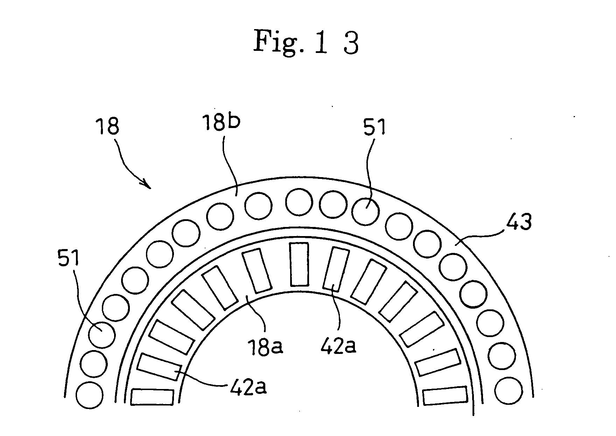

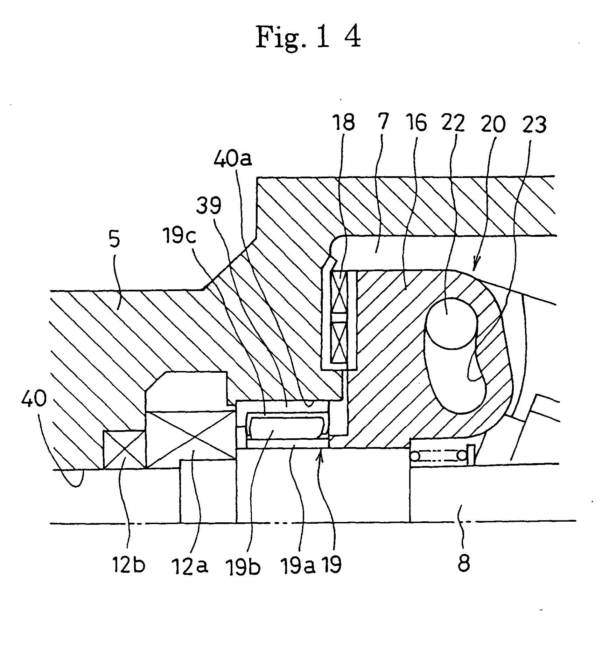

In FIGS. 12 and 13, the outer thrust bearing at the thrust bearing unit 18 is constituted of spherical bodies 51. In the example presented in FIG. 12, twenty four spherical bodies are disposed outward in a quantity equal to the quantity (24) of the inner needle rollers 42a, whereas thirty six outer spherical bodies 51 are disposed in a quantity larger than the quantity of inner needle rollers 42a in the example presented in FIG. 13.

As described above, the load imparted from the thrust flange can be distributed over a plurality of rows of thrust bearings according to the present invention. In other words, the load is divided over the plurality of rows, which allows the individual thrust bearings to be miniaturized to achieve a lower profile. By setting the length of the outer needle rollers smaller than the length of the inner needle rollers in a thrust bearing unit having needle rollers disposed inward and outward along the radial direction, the centrifugal force applied to the outer needle rollers can be reduced to prevent wear of the holder. Alternatively, by setting the length of the inner needle rollers smaller than the length of the outer needle rollers, the process of wear of the needle rollers is slowed down in spite of high circumferential speed.

By creating a gap between the thrust bearings and the front head that supports the thrust bearings, the thrust bearings are allowed to tilt toward the front head in conformance to the level of the load applied to the thrust flange to evenly distribute the load on the inner side and the outer side. This gap may be formed by setting the diameter of the needle rollers disposed outward along a radial direction smaller than the diameter of the needle rollers disposed inward along the radial direction, may be formed by setting the thickness of either or both of the races disposed on the front side and the rear side of the needle bearings smaller on the outer side along the radial direction compared to the thickness on the inner side along the radial direction or may be formed with an inclined surface constitutmg the thrust bearing contact surface of the front head.

The radial bearing, which is first mounted at the thrust flange and is then inserted at the radial bearing insertion portion of the front head, is installed after the shaft seal is attached, or it is mounted just as the shaft seal is mounted. This means that the radial bearing does not get in the way when inserting the shaft seal, and also, by utilizing a solid radial bearing, a smaller diameter is achieved and sufficient space along the radial direction is assured to accommodate the thrust bearings disposed over a plurality of rows.

Although the invention has been described in its preferred form with a certain degree of particularity, it is understood that the present disclosure of what preferred form may be changed in the details of construction and the combination and arrangement of parts without departing from the spirit and scope of the invention as hereafter claimed.

## Claims

1. A compressor having a shaft that is rotated by a drive force supplied from outside and a reciprocating mechanism that converts the rotating movement of said shaft to a linearly reciprocating movement along an axial direction and causes a piston to make a reciprocal movement, **characterized in:**
**that** thrust bearings are provided over a plurality of rows set along a radial direction between a thrust flange constituting said reciprocating mechanism and a front head.

2. A reciprocating compressor according to claim 1, **characterized in:**
**that** said thrust bearings are disposed over two rows set along the radial direction.

3. A reciprocating compressor according to claim 1 or claim 2, **characterized in:**
**that** said thrust bearings are each constituted of at least needle rollers.

4. A reciprocating compressor according to claim 3, **characterized in:**
**that** the length of needle rollers disposed inward along the radial direction is set equal to the length of needle rollers disposed outward along the radial direction.

5. A reciprocating compressor according to claim 3, **characterized in:**
**that** the length of needle rollers disposed inward along the radial direction is set larger than the length of needle rollers disposed outward along the radial direction.

6. A reciprocating compressor according to claim 3, **characterized in:**
**that** the length of needle rollers disposed inward along the radial direction is set smaller than the length of needle rollers disposed outward along the radial direction.

7. A reciprocating compressor according to any one of claims 1 to 6, **characterized in:**
**that** a gap widening toward the outside along the radial direction is formed between said thrust bearings and said front head that supports said thrust bearings.

8. A reciprocating compressor according to claim 7, **characterized in:**
**that** said gap is formed by setting the diameter of said needle rollers disposed outward along the radial direction smaller than the diameter of said needle rollers disposed inward along the radial direction.

9. A reciprocating compressor according to claim 7, **characterized in:**
**that** said gap is formed by setting the thickness of either of or both of races disposed on the front side and the rear side of the needle bearings smaller on the outer side along the radial direction than the thickness on the inner side along the radial direction.

10. A reciprocating compressor according to claim 7, **characterized in:**
**that** said gap is formed with an inclination formed at said front head, on a contact surface where said thrust bearings come in contact with said front head.

11. A reciprocating compressor according to any one of claims 1 to 10, **characterized in:**
**that** said thrust bearings are constituted of needle rollers and spherical bodies.

12. A reciprocating compressor according to any one of claims 3 to 11, **characterized in:**
**that** the quantity of needle rollers or spherical bodies disposed outward along the radial direction is greater than the quantity of needle rollers or spherical bodies disposed inward along the radial direction.

13. A reciprocating compressor according to any one of claims 1 to 12, **characterized in:**
**that** said thrust bearings disposed over a plurality of rows set along the radial direction are integrated.

14. A reciprocating compressor according to any one of claims 1 to 12, **characterized in:**
**that** said thrust bearings disposed over a plurality of rows set along the radial direction are provided as independent parts separated from one another along the radial direction.

15. A reciprocating compressor according to any one of claims 1 to 14, **characterized in:**
**that** a radial bearing is first fitted at said thrust flange and is then mounted at said front head as said radial bearing is inserted together with said shaft into a radial bearing insertion portion of said front head, and said radial bearing insertion portion is constituted as a fitting clearance.

16. A reciprocating compressor according to claim 15, **characterized in:**
**that** said radial bearing is a solid-type radial bearing.

17. A reciprocating compressor according to any one of claims 1 to 16, **characterized in:**
**that** a shell-type radial bearing is inserted at a radial bearing insertion portion of said front head with an outer race fitted and fixed at a sleeve.

18. A reciprocating compressor according to any one of claims 1 to 17, **characterized in:**
**that** carbon dioxide is used as a coolant.
